# EUROPEAN PATENT SPECIFICATION

(11) **EP 1 953 477 B1**
(45) Date of publication and mention of the grant of the patent: **18.04.2018**
(21) Application number: 06822129.0
(22) Date of filing: 24.10.2006
(51) Int. Cl.: F25B 1/00, F25B 49/02, H02P 27/08, F04B 49/06, H02M 1/36, H02M 7/537

(54) **REFRIGERATOR COMPRESSOR OPERATING METHOD AND REFRIGERATOR**
KÜHLSCHRANKKOMPRESSORBETRIEBSVERFAHREN UND KÜHLSCHRANK
PROCEDE DE FONCTIONNEMENT DE COMPRESSEUR DE REFRIGERATEUR ET REFRIGERATEUR

(30) Priority: 31.10.2005 JP 2005315998; 14.03.2006 JP 2006069139
(43) Date of publication of application: 06.08.2008
(73) Proprietor: DAIKIN INDUSTRIES, LTD., Osaka-shi, Osaka 530-8323 (JP)
(72) Inventor: NAGAYOSHI, Katsunori, Sakai-shi Osaka 591-8511 (JP); FURUKAWA, Hiroshi, Sakai-shi Osaka 591-8511 (JP); SHIMODA, Junichi, Sakai-shi Osaka 591-8511 (JP); MIZOBE, Hironobu, Sakai-shi Osaka 591-8511 (JP); KOKURA, Takeshi, Sakai-shi Osaka 591-8511 (JP)
(74) Representative: Hoffmann Eitle
(86) International application number: PCT/JP2006/321149
(87) International publication number: WO 2007/052493

(56) References cited:
- EP-A1- 0 865 152
- EP-A1- 1 482 260
- WO-A1-2004/106820
- WO-A1-2005/103582
- JP-A- 02 264 171
- JP-A- 08 009 683
- JP-A- 08 223 989
- JP-A- 2001 352 786
- JP-A- 2002 272 126
- US-A- 4 724 680

## Description

The present invention relates to a compressor operating method of a refrigeration device, and a refrigeration device.

### BACKGROUND ART

Conventionally there is provided a refrigeration device disposed with a refrigerant cycle including a compressor, a condenser, an evaporator, and an expansion valve (see Patent Document 1). When this type of refrigeration device is installed onsite, it is common that such device is installed onsite in a factory default state. Patent document 2 relates to an inverter driven compressor warm up operating method. Patent document 3 discloses a method for driving an output stage by pulse-width modulation. Patent documents 4 to 7 relate to control units for refrigeration devices.
Patent Document 1: JP S62-158966
Patent Document 2: WO 2005/103582 A1
Patent Document 3: JP 2001 352786 A
Patent Document 4: EP 0 865 152 A1
Patent Document 5: US 4 724 680 A
Patent Document 6: WO 2004/106820 A1
Patent Document 7: EP 1 482 260 A1

### DISCLOSURE OF THE INVENTION

### <OBJECT TO BE ACHIEVED BY THE PRESENT INVENTION>

Immediately after the refrigeration device is installed, there is a case where refrigerant is liquefied in the compressor. In such a case, if the compressor is powered on and a preheating operation or a normal operation of the compressor is started at a regular carrier frequency, leakage of electric current occurs because of a reduced insulation, and a breaker installed onsite is tripped, causing problems such as interruption of electric current to the refrigeration device and the like.

Therefore, it is necessary to mount a separate preheating device such as a crankcase heater to the compressor. In some cases, it is necessary to heat the compressor with warm air from the outside or the like and discharge the refrigerant from the compressor.

An object of the present invention is to provide a refrigeration device and a compressor operating method of the refrigeration device, in which occurrence of leakage of electric current due to a liquefied refrigerant at a first-time operation of a compressor is reduced and also in which a separate preheating device is unnecessary.

### <MEANS TO ACHIEVE THE OBJECT>

A compressor operating method of a refrigeration device according to a first aspect of the present invention is the operation method of claim 1. With this operation method, at a first-time operation of the compressor after the refrigeration device is installed, the compressor is operated at a carrier frequency that is lower than carrier frequency for a normal operation. Thereafter, the normal operation is performed at the carrier frequency for the normal operation.

Here, at the first-time operation of the compressor after the refrigeration device is installed, the compressor is operated at a carrier frequency that is lower than that for the normal operation. Therefore, occurrence of leakage of electric current at the first-time operation immediately after installation is reduced, thereby preventing tripping of a breaker. Further, a separate preheating device such as a crankcase heater becomes unnecessary. The compressor operating method of a refrigeration device according to the present invention includes a determination step in which whether or not it is the first-time operation of the compressor is determined before the compressor is operated.

Here, because the determination step is further provided, whether or not it is the first-time operation of the compressor can be determined. Based on this determination result, it is possible to automatically reduce the carrier frequency at the first-time operation and perform the operation.

A compressor operating method of a refrigeration device according to a further aspect of the present invention is the compressor operating method of a refrigeration device wherein, in the determination step, whether or not it is the first-time operation of the compressor is determined by checking a flag.

Here, a flag is checked in the determination step, and thereby whether or not it is the first-time operation of the compressor can be more accurately determined by using the flag.

A refrigeration device according to claim 3 allows performance of a preheating operation of the compressor during the time from initial power-on after installation of the refrigeration device to a normal operation. The refrigeration device causes the compressor to perform the preheating operation at a second carrier frequency that is lower than a first carrier frequency. The first carrier frequency is a carrier frequency for the normal operation.

Here, because the preheating operation of the compressor is performed at the second carrier frequency that is lower than the first carrier frequency that is a carrier frequency for the normal operation, occurrence of leakage of electric current at a first-time preheating operation immediately after installation is reduced, thereby preventing tripping of a breaker. Further, a separate preheating device such as a crankcase heater becomes unnecessary. The refrigeration device according to claim 4, is configured such that after the refrigeration device is installed, at a first-time operation of the compressor, a preliminary operation is performed for a predetermined time period at a third carrier frequency that is lower than a first carrier frequency. Thereafter, the compressor is temporarily stopped. Then, the compressor is restarted, and the normal operation of the compressor is performed at the first carrier frequency. The first carrier frequency is a carrier frequency for the normal operation.

Here, at the first-time operation of the compressor, the preliminary operation is performed at the third carrier frequency that is lower than the first carrier frequency that is a carrier frequency for the normal operation, and then the compressor is temporarily stopped. Thereafter, the compressor is restarted so that the normal operation is performed at the first carrier frequency. Thus, occurrence of leakage of electric current at the first-time operation immediately after installation is reduced, preventing tripping of a breaker. Further, a separate preheating device such as a crankcase heater becomes unnecessary.

A refrigeration device according to another aspect of the present invention is the refrigeration device according to the fifth aspect of the present invention, wherein the carrier frequency is increased to the first carrier frequency. Then, the compressor is restarted and the normal operation is performed at the first carrier frequency.

Here, after the carrier frequency is increased to the first carrier frequency, the compressor is restarted and the normal operation is performed at the first carrier frequency. Thus, refrigerant discharged from the compressor after restart can be smoothly circulated in the refrigerant cycle.

A refrigeration device according to another aspect of the present invention is the refrigeration device further including a determination means for determining whether or not it is the first-time operation of the compressor.

Here, because the determination means is further provided, whether or not it is the first-time operation of the compressor can be determined by the determination means. Based on this determination result, it is possible to automatically reduce the carrier frequency at the first-time operation and perform the operation.

A refrigeration device according to another aspect of the present invention is the refrigeration device according to the seventh aspect of the present invention, further including a flag memory unit. The flag memory unit stores a flag that indicates the first-time operation of the compressor. The determination means can determine whether or not it is the first-time operation of the compressor by checking the flag.

Here, as the determination means checks the flag stored in the flag memory unit, whether or not it is the first-time operation of the compressor can be more accurately determined by using the flag.

A refrigeration device according to the present invention is a refrigeration, wherein the compressor is driven by a motor that is controlled by an inverter.

Here, because the compressor is driven by the motor that is controlled by the inverter, the capacity of the compressor can be varied accurately according to the change in the inverter frequency.

### <EFFECT OF THE INVENTION>

According to the first aspect of the present invention, occurrence of leakage of electric current at the first-time operation immediately after installation can be reduced, thereby preventing tripping of a breaker. Further, a separate preheating device such as a crankcase heater becomes unnecessary. Based on the determination result as to whether or not it is the first-time operation of the compressor, it is possible to automatically reduce the carrier frequency at the first-time operation and perform the operation.

According to another aspect of the present invention, whether or not it is the first-time operation of the compressor can be more accurately determined by using the flag.

According to another aspect of the present invention, occurrence of leakage of electric current at the first-time preheating operation immediately after installation can be reduced, thereby preventing tripping of a breaker. Further, a separate preheating device such as a crankcase heater becomes unnecessary.

According to the another aspect of the present invention, refrigerant discharged from the compressor after restart can be smoothly circulated in the refrigerant cycle.

According to the another aspect of the present invention, based on the determination result as to whether or not it is the first-time operation of the compressor, it is possible to automatically reduce the carrier frequency at the first-time operation and perform the operation.

According to another aspect of the present invention, whether or not it is the first-time operation of the compressor can be determined more accurately by using the flag.

According to the present invention, the capacity of the compressor can be accurately varied according to the change in the inverter frequency.

### BRIEF DESCRIPTION OF THE DRAWINGS

Figure 1 is a configuration diagram showing a refrigerant circuit of an air conditioner according to an embodiment of a refrigeration device of the present invention.
Figure 2 is a configuration diagram of a heat source side control unit in Figure 1.
Figure 3 is a flowchart showing a procedure of an operation method of a compressor in the case where a preheating operation of the compressor in the air conditioner in Figure 1 is performed.
Figure 4 is a graph showing the change in the carrier frequency of the compressor in the case where the preheating operation of the compressor in the air conditioner in Figure 1 is performed.
Figure 5 is a flowchart showing a procedure of the operation method of the compressor in the case where the preliminary operation of the compressor in the air conditioner in Figure 1 is performed.
Figure 6 is a graph showing the change in the carrier frequency of the compressor in the case where the preliminary operation of the compressor in the air conditioner in Figure 1 is performed.

### DESCRIPTION OF THE REFERENCE SYMBOLS

- 1: Air conditioner
- 2: Heat source unit
- 21: Compressor
- 21a: Motor
- 22: Four way switching valve
- 23: Heat source side heat exchanger
- 24: Accumulator
- 27: Outdoor fan
- 30: Heat source side control unit
- 31: CPU
- 32: Nonvolatile memory
- 33: Inverter circuit
- 34: Flag area
- 35: Flag

### BEST MODE FOR CARRYING OUT THE INVENTION

### <EMBODIMENT OF THE PRESENT INVENTION>

As an example of a refrigeration device of the present invention, an air conditioner for both cooling and heating uses is described based on the drawings.

### <CONFIGURATION OF AIR CONDITIONER 1>

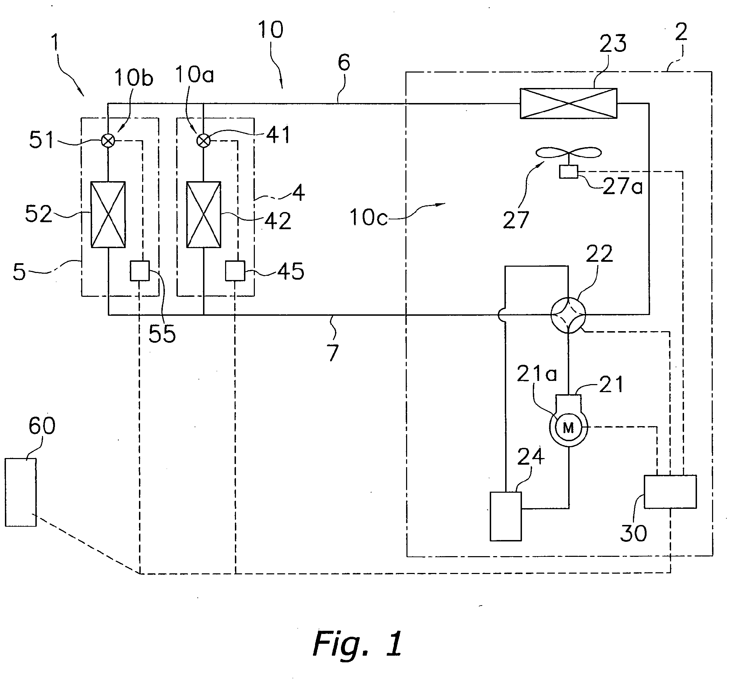

Figure 1 is a schematic refrigerant circuit diagram of an air conditioner 1 according to an embodiment of the present invention. The air conditioner 1 is a device used for cooling and heating a room of a building and the like by performing a vapor compression type refrigerant cycle operation. The air conditioner 1 mainly includes a heat source unit 2, a plurality (two in this embodiment) utilization units 4, 5 connected to the heat source unit 2 in a parallel manner, and a liquid refrigerant communication pipe 6 and a gas refrigerant communication pipe 7 which interconnect the heat source unit 2 and utilization units 4, 5. In other words, the vapor compression type refrigerant circuit 10 of the air conditioner 1 in this embodiment is constituted by the interconnection of the heat source unit 2, the utilization units 4, 5, the liquid refrigerant communication pipe 6, and the gas refrigerant communication pipe 7.

### <HEAT SOURCE UNIT>

The heat source unit 2 is installed outside on a roof of a building or the like, and is connected to the utilization units 4, 5 via the liquid refrigerant communication pipe 6 and the gas refrigerant communication pipe 7, thereby constituting the refrigerant circuit 10 together with the utilization units 4, 5.

The heat source unit 2 mainly includes a heat source side refrigerant circuit 10c that constitutes a part of the refrigerant circuit 10. The heat source side refrigerant circuit 10c mainly includes a compressor 21, a four way switching valve 22, a heat source side heat exchanger 23, an accumulator 24, and a heat source side control unit 30.

The compressor 21 is a compressor whose operation capacity can be varied according to the change in the inverter frequency. In this embodiment, the compressor 21 is a positive displacement compressor that is driven by a motor 21a that is controlled by an inverter circuit 33. The compressor 21 can perform a preheating operation by a phase interruption of electric current from the inverter circuit 33 to the motor 21a.

Note that in this embodiment, there is only one compressor 21, however, it is not limited thereto. According to the number of utilization units to be connected or the like, two or more compressors may be connected in a parallel manner.

The four way switching valve 22 is a valve for switching the flow of refrigerant. With the four way switching valve 22, during the cooling operation, in order to cause the heat source side heat exchanger 23 to function as a condenser for refrigerant compressed in the compressor 21, and also to cause the utilization side heat exchangers 42, 52 to function as evaporators for refrigerant condensed in the heat source side heat exchanger 23, a discharge side of the compressor 21 and a gas side of the heat source side heat exchanger 23 can be interconnected, and a suction side of the compressor 21 (specifically, the accumulator 24) and the gas refrigerant communication pipe 7 side can be interconnected (see the solid lines of the four way switching valve 22 in Figure 1): whereas during the heating operation, in order to cause the utilization side heat exchangers 42, 52 to function as condensers for refrigerant compressed in the compressor 21, and also to cause the heat source side heat exchanger 23 to function as an evaporator for refrigerant condensed in the utilization side heat exchanger, the discharge side of the compressor 21 and the gas refrigerant communication pipe 7 side can be interconnected and the suction side of the compressor 21 and the gas side of the heat source side heat exchanger 23 can be interconnected (see broken lines of the four way switching valve 22 in Figure 1).

In this embodiment, the heat source side heat exchanger 23 is a heat exchanger that functions as a condenser for refrigerant during the cooling operation, and that functions as an evaporator for refrigerant during the heating operation. The gas side of the heat source side heat exchanger 23 is connected to the four way switching valve 22, and the liquid side thereof is connected to the liquid refrigerant communication pipe 6.

In this embodiment, the heat source unit 2 is disposed with an outdoor fan 27 (ventilation fan) for sucking outdoor air into the unit, supplying air to the heat source side heat exchanger 23, and then discharging air to the outside. The heat source unit 2 can allow heat exchange between outdoor air and refrigerant flowing in the heat source side heat exchanger 23.

The accumulator 24 is connected between the four way switching valve 22 and the compressor 21, and is a container capable of accumulating excess refrigerant generated in the refrigerant circuit 10 according to the operation load of the utilization units 4, 5.

As described above, utilization side refrigerant circuits 10a, 10b, the heat source side refrigerant circuit 10c, and the liquid refrigerant communication pipes 6, 7 are interconnected, thereby constituting the refrigerant circuit 10 of the air conditioner 1. The air conditioner 1 in the embodiment is operated by switching between the cooling operation and the heating operation by the four way switching valve 22.

The heat source side control unit 30 is described in detail in the section below.

### <CONFIGURATION OF HEAT SOURCE SIDE CONTROL UNIT 30>

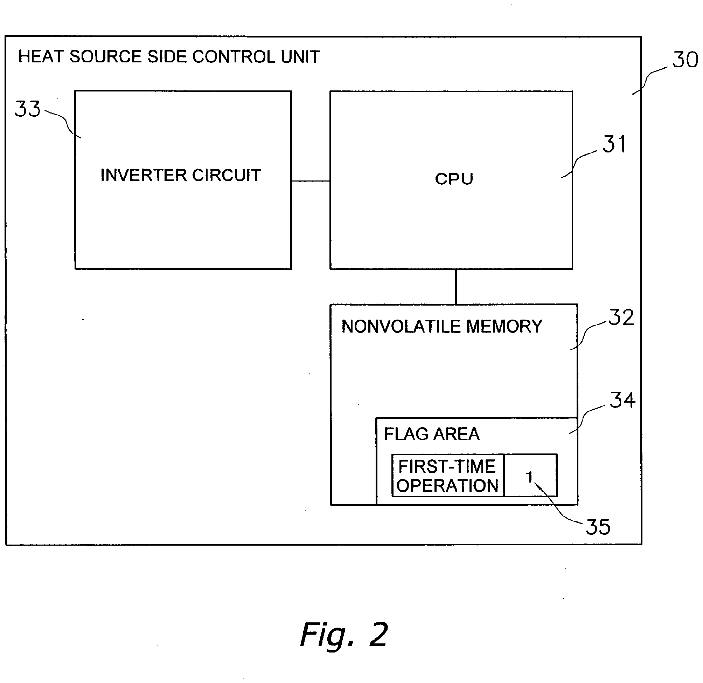

As shown in Figure 2, the heat source side control unit 30 controls the heat source unit 2. The heat source side control unit 30 includes a CPU 31, a rewritable nonvolatile memory 32 such as an EEPROM, and the inverter circuit 33 that controls the motor 21a of the compressor 21.

The nonvolatile memory 32 has a flag area 34 for storing a flag 35 that indicates that a first-time operation of the compressor 21. For example, if the compressor 21 has not been operated during the time from factory shipment to the present, the flag 35 indicates "1" that corresponds to the first-time operation of the compressor 21. On the other hand, if the compressor 21 has been already operated, the flag 35 indicates "0" that corresponds to a not first-time operation of the compressor 21.

The CPU 31 is a microcomputer capable of controlling the drive of the motor 21a of the compressor 21 and a motor 27a of the outdoor fan 27. In addition, the CPU 31 functions as a determination means for determining whether or not it is the first-time operation of the compressor 21 by checking the flag 35. Further, when it is determined that it is the first-time operation of the compressor 21, the CPU 31 rewrites the flag 35 from "1" to "0" after the determination.

The inverter circuit 33 can change the carrier frequency to the motor 21a of the compressor 21. In addition, the inverter circuit 33 can cause phase interruption to the motor 21a for a preheating operation of the compressor 21.

The heat source side control unit 30 can exchange a control signal and the like with utilization side control units 45, 55 of the utilization units 4, 5. Based on a signal from a controller 60 (see Figure 1) operated by an user, the heat source side control unit 30 and the utilization side control units 45, 55 of the utilization units 4, 5 can start/finish the operation of the air conditioner 1 and switch the operation modes. In addition, based on a signal from the controller 60, the heat source side control unit 30 can control the start of the preheating operation and a normal operation of the compressor 21.

### <UTILIZATION UNIT>

The utilization units 4, 5 are installed inside of a building and the like, and are connected to the heat source unit 2 via the liquid refrigerant communication pipe 6 and the gas refrigerant communication pipe 7, thereby constituting a part of the refrigerant circuit 10.

The utilization unit 4 mainly includes the utilization side refrigerant circuit 10a that constitutes a part of the refrigerant circuit 10. The utilization side refrigerant circuit 10a mainly includes a utilization side expansion valve 41 (utilization side expansion mechanism) and a utilization side heat exchanger 42. Likewise, the utilization unit 5 mainly includes the utilization side refrigerant circuit 10b that constitutes a part of the refrigerant circuit 10. The utilization side refrigerant circuit 10b mainly includes a utilization side expansion valve 51 (utilization side expansion mechanism) and a utilization side heat exchanger 52.

In the embodiment, the utilization side heat exchangers 42, 52 function as evaporators for refrigerant during the cooling operation to cool indoor air, and function as condensers for refrigerant during the heating operation to heat indoor air.

### <OPERATION METHOD OF COMPRESSOR 21>

Next, the operation method of the compressor 21 is described separately for the case where the preheating operation of the compressor 21 is performed and the case where a preliminary operation is performed without performing the preheating operation.

### <PREHEATING OPERATION>

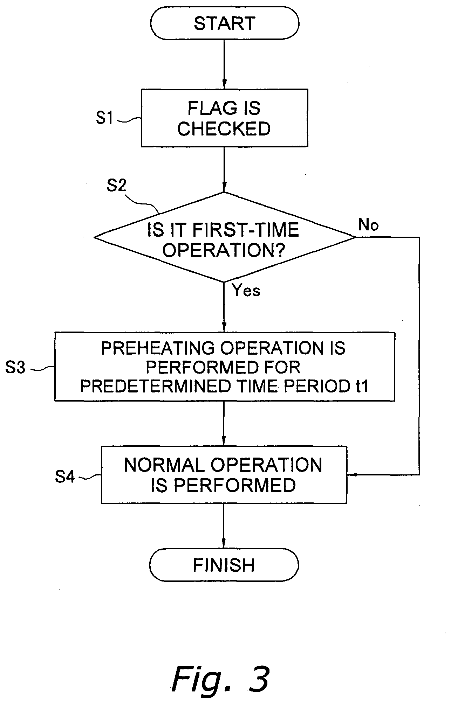

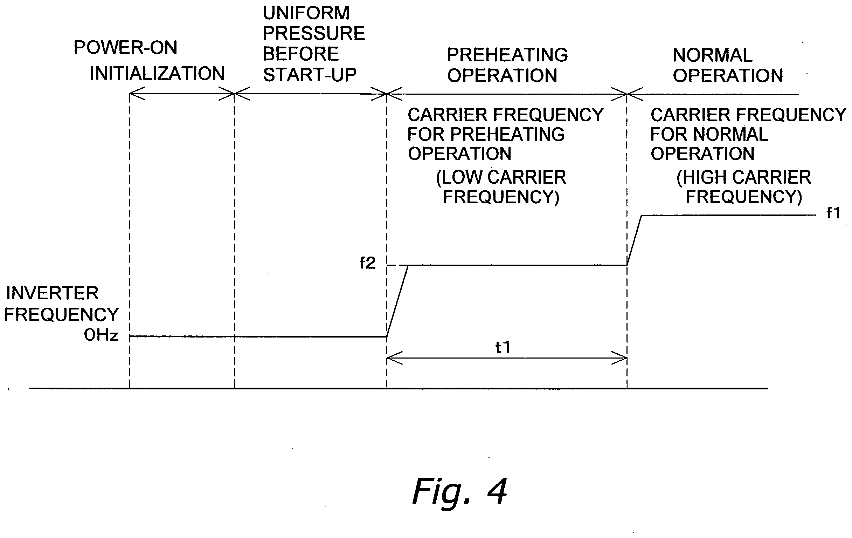

Figure 3 shows a flowchart showing a procedure of the operation method of the compressor 21 in the case where the preheating operation is performed. Figure 4 is a graph showing the change in the carrier frequency of the compressor 21 in the case where the preheating operation is performed.

After the heat source unit 2 is installed at a predetermined position outside of a building, when the power is on, as shown in Figure 4, the air conditioner 1 is initialized. The pressure of the liquid refrigerant before the compressor 21 is started is uniform. After the power is on, if a signal to start the preheating operation is transmitted from the controller 60 to the heat source side control unit 30, the preheating operation is started by the following procedure.

First, in step S1 in Figure 3, the CPU 31 of the heat source side control unit 30 checks the flag 35 that is present in the flag area 34 of the nonvolatile memory 32. Here, the value "1" of the flag 35 indicates the first-time operation, whereas the value "0" of the flag 35 indicates the not first-time operation.

In step S2, based on the result of flag check, the CPU 31 determines whether or not it is the first-time operation. When it is determined based on the flag "1" that it is the first-time operation, the procedure simply proceeds to step S3, whereas when it is determined based on the flag "0" that it is not the first-time operation, the procedure proceeds to step S4.

Next, in step S3, the CPU 31 controls the compressor 21 to perform the preheating operation for a predetermined time period t1 by phase interruption of electric current. At this time, as shown in Figure 4, the CPU 31 controls the compressor 21 to perform the preheating operation for the predetermined time period t1 at a second carrier frequency f2 that is lower than a first carrier frequency f1 that is a carrier frequency for the normal operation. During the performance of the preheating operation, refrigerant that is liquefied in the compressor 21 is discharged to a refrigerant pipe of the refrigerant circuit 10.

Thereafter, in step S4, the CPU 31 increases the carrier frequency of the compressor 21 to the first carrier frequency 51, and controls the compressor 21 to perform the normal operation at the first carrier frequency f1.

### <PRELIMINARY OPERATION>

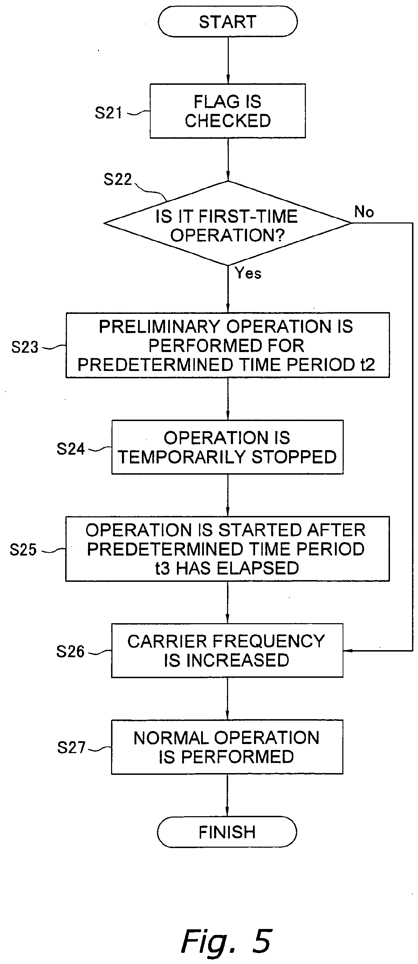

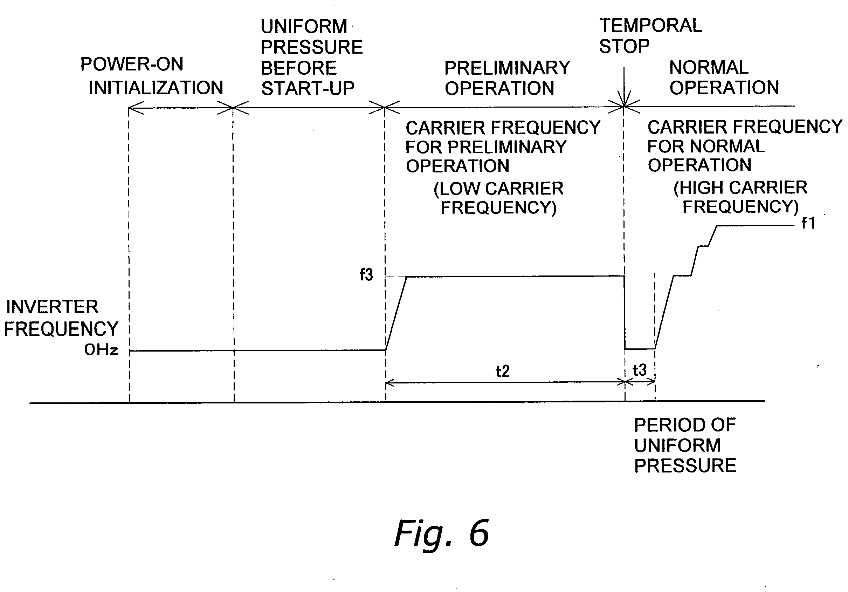

Figure 5 shows a flowchart of a procedure of the operation method of the compressor 21 in the case where the preliminary operation is performed. Figure 6 is a graph showing the change in the carrier frequency of the compressor 21 in the case where the preliminary operation is performed.

After the air conditioner 1 is installed, when the power is on, as shown in Figure 6, the air conditioner 1 is initialized. The pressure of the liquid refrigerant before the compressor 21 is started is uniform. After the power is on, if a signal to start the preheating operation is not transmitted but a signal to start the normal operation is transmitted from the controller 60, the preliminary operation is started by the following procedure.

First, in step S21, as is the case with the above described step S1, the CPU 31 checks the flag 35 that is present in the flag area 34 of the nonvolatile memory 32.

In step S22, as is the case with the above described step S2, the CPU 31 determines whether or not it is the first-time operation, based on the result of flag check. When it is determined that it is the first-time operation, the procedure simply proceeds to step S23, whereas when it is determined that it is not the first-time operation, the procedure proceeds to step S26. The term "first-time operation" used herein refers to a first-time operation state in which neither the preheating operation nor the normal operation has been performed.

Next, in step S23, the CPU 31 controls the compressor 21 to perform the preliminary operation for a predetermined time period t2. At this time, as shown in Figure 6, the CPU 31 controls the compressor 21 to perform the preliminary operation for the predetermined time period t2 at a third carrier frequency f3 that is lower than the first carrier frequency f1 that is a carrier frequency for the normal operation. During the performance of the preliminary operation, refrigerant that is liquefied in the compressor 21 is discharged to a refrigerant pipe of the refrigerant circuit 10.

Next, in step S24, the CPU 31 controls the compressor 21 to temporarily stop the preliminary operation. During a predetermined time period t3 in which the preliminary operation is stopped, the pressure of the refrigerant becomes uniform.

Next, in step S25, after the predetermined time period t3 has elapsed, the CPU 31 restarts and controls the compressor 21 to start the operation.

Thereafter, in step S26, the CPU 31 increases the carrier frequency to the first carrier frequency f1 and restarts the compressor 21.

Thereafter, in step S27, the CPU 31 controls the compressor 21 to perform the normal operation at the first carrier frequency f1.

### <CHARACTERISTICS>

(1) According to the operation method of the compressor 21 in the air conditioner 1 in the embodiment, at the first-time operation of the compressor 21 after the air conditioner 1 is installed, the compressor 21 is operated at the second carrier frequency f2 or the third carrier frequency f3 that is lower than the carrier frequency for the normal operation. Therefore, occurrence of leakage of electric current at the first-time operation immediately after installation is reduced, thereby preventing tripping of a breaker. Further, a separate preheating device such as a crankcase heater becomes unnecessary.
(2) With the air conditioner 1 in the embodiment, the preheating operation of the compressor 21 is performed at the second carrier frequency f2 that is lower than the first carrier frequency f1 that is a carrier frequency for the normal operation. Therefore, occurrence of leakage of electric current at the preheating operation immediately after installation is reduced, thereby preventing tripping of a breaker. Further, a separate preheating device such as a crankcase heater becomes unnecessary.
(3) With the air conditioner 1 in the embodiment, at the first-time operation of the compressor 21, the preliminary operation is performed at the third carrier frequency f3 that is lower than the first carrier frequency f1 that is a carrier frequency for the normal operation. Thereafter, the compressor 21 is temporarily stopped, and then the compressor 21 is restarted to perform the normal operation at the first carrier frequency f1. Therefore, occurrence of leakage of electric current at the first-time operation immediately after installation is reduced, thereby preventing tripping of a breaker. Further, a separate preheating device such as a crankcase heater becomes unnecessary.
   In addition, the air conditioner 1 in the embodiment can allow the preheating operation. Even when the preheating operation is not performed and the normal operation is selected by a user by operating the controller 60, the CPU 31 can control the compressor 21 to perform the preliminary operation at the third carrier frequency f3 that is lower than the first carrier frequency f1.
(4) With the air conditioner 1 in the embodiment, after the carrier frequency is increased to the first carrier frequency f1 in stages or in a continuous manner, the compressor 21 is restarted, and the normal operation is performed at the first carrier frequency f1. Thus, the refrigerant discharged from the compressor 21 after restart can be smoothly circulated in the refrigerant circuit 10.
(5) The air conditioner 1 in the embodiment further includes the CPU 31 capable of functioning as the determination means. Therefore, whether or not it is the first-time operation of the compressor 21 can be determined by the CPU 31. Based on this determination result, it is possible to automatically reduce the carrier frequency at the first-time operation and perform the operation.
(6) With the air conditioner 1 in the embodiment, as the CPU 31 checks the flag 35 stored in the nonvolatile memory 32 capable of functioning as a flag memory unit, whether or not it is the first-time operation of the compressor 21 can be more accurately determined by using the flag 35.
(7) With the air conditioner 1 in the embodiment, the compressor 21 is driven by the motor 21a that is controlled by the inverter circuit 33, so that the capacity can be varied according to the change in the inverter frequency.
(8) The operation method of the compressor 21 in the air conditioner 1 in the embodiment further includes the determination step in which whether or not it is the first-time operation of the compressor 21 is determined before the compressor 21 is operated. Therefore, whether or not it is the first-time operation of the compressor 21 can be determined. Based on this determination result, it is possible to automatically reduce the carrier frequency at the first-time operation and perform the operation.
(9) The operation method of the compressor 21 in the air conditioner 1 in the embodiment determines, in the determination step, whether or not it is the first-time operation of the compressor 21 by checking the flag 35. Accordingly, whether or not it is the first-time operation of the compressor 21 can be more accurately determined by using the flag 35.

### <ALTERNATIVE EMBODIMENT>

(A) In the above embodiment, the air conditioner 1 capable of allowing the preheating operation is described as an example of the air conditioner 1.

### INDUSTRIAL APPLICABILITY

The present invention is applicable to a refrigeration device having a compressor. In addition, the present invention is applicable to a cooling and heating air conditioner having a compressor.

## Claims

1. A compressor operating method of a refrigeration device (1) that is an operation method of a compressor (21) of a refrigeration device (1), comprising:
a first-time operation step in which the compressor (21) after installation of the refrigeration device (1) is operated at a carrier frequency lower than a carrier frequency for a normal operation; and
a subsequent normal operation step in which the compressor (21) is operated at the carrier frequency for the normal operation,
wherein the compressor (21) is driven by a motor (21a) that is controlled by an inverter, wherein
the compressor operating method of the refrigeration device (1) further comprises a determination step in which whether or not it is the first-time operation of the compressor (21) is determined before the compressor (21) is operated.

2. The compressor operating method of the refrigeration device (1) according to claim 1, wherein,
in the determination step, whether or not it is the first-time operation of the compressor (21) is determined by checking a flag (35).

3. A refrigeration device (1), comprising:
a compressor (21), wherein
the refrigeration device (1) allows performance of a preheating operation of the compressor (21) during the time from initial power-on after installation of the refrigeration device (1) to a normal operation, and
the preheating operation of the compressor (21) is performed at a second carrier frequency that is lower than a first carrier frequency that is a carrier frequency for the normal operation.

4. A refrigeration device (1), comprising:
a compressor (21),
wherein the refrigeration device (1) is configured to control the compressor such that,
at a first-time operation of the compressor (21) after the refrigeration device (1) is installed, the compressor (21) is caused by the refrigeration device (1) to perform a preliminary operation for a predetermined time period at a third carrier frequency that is lower than a first carrier frequency that is a carrier frequency for a normal operation; thereafter temporarily the compressor (21) stops; and then the compressor (21) restarts to perform the normal operation at the first carrier frequency

5. The refrigeration device (1) according to claim 4, wherein the refrigeration device (1) is configured to control the compressor such that the compressor (21) restarts after a carrier frequency is increased to the first carrier frequency, and the compressor (21) is caused to perform a normal operation at the first carrier frequency.

6. The refrigeration device (1) according to claim 3 or 4 further comprising a determination means (31) for determining whether or not it is the first-time operation of the compressor (21).

7. The refrigeration device (1) according to claim 6, further comprising a flag memory unit (32) configured to store a flag (35) that indicates a first-time operation of the compressor (21), wherein
the determination means (31) is configured to determine whether or not it is the first-time operation of the compressor (21) by checking the flag (35).

## Patentansprüche

1. Kompressorbetriebsverfahren eines Kältegeräts (1), das ein Betriebsverfahren eines Kompressors (21) eines Kältegeräts (1) ist, umfassend:
einen erstmaligen Betriebsschritt, bei dem der Kompressor (21) nach Installation des Kältegeräts (1) mit einer Trägerfrequenz betrieben wird, die niedriger als eine Trägerfrequenz für einen Normalbetrieb ist; und
einen darauffolgenden normalen Betriebsschritt, bei dem der Kompressor (21) mit der Trägerfrequenz für den Normalbetrieb betrieben wird,
wobei der Kompressor (21) von einem Motor (21a) angetrieben wird, welcher von einem Inverter gesteuert wird, wobei
das Kompressorbetriebsverfahren des Kältegeräts (1) weiter einen Bestimmungsschritt umfasst, bei dem vor dem Betrieb des Kompressors (21) bestimmt wird, ob es sich um den erstmaligen Betrieb des Kompressors (21) handelt oder nicht.

2. Kompressorbetriebsverfahren des Kältegeräts (1) nach Anspruch 1, wobei
in dem Bestimmungsschritt die Bestimmung dessen, ob es sich um den erstmaligen Betrieb des Kompressors (21) handelt oder nicht, durch die Überprüfung eines Merkers (35) erfolgt.

3. Kältegerät (1), umfassend:
einen Kompressor (21), wobei
das Kältegerät (1) die Durchführung eines Vorwärmbetriebs des Kompressors (21) in der Zeit von der Erstinbetriebnahme nach der Installation des Kältegeräts (1) bis zu einem Normalbetrieb ermöglicht, und
der Vorwärmbetrieb des Kompressors (21) mit einer zweiten Trägerfrequenz durchgeführt wird, welche niedriger ist als eine erste Trägerfrequenz, die eine Trägerfrequenz für den Normalbetrieb ist.

4. Kältegerät (1), umfassend:
einen Kompressor (21),
wobei das Kältegerät (1) konfiguriert ist, den Kompressor dergestalt zu steuern, dass
bei einem erstmaligen Betrieb des Kompressors (21), nach der Installation des Kältegeräts (1), der Kompressor (21) von dem Kältegerät (1) angewiesen wird, einen vorläufigen Betrieb für die Dauer eines vorgegebenen Zeitabschnitts mit einer dritten Trägerfrequenz durchzuführen, welche niedriger als eine erste Trägerfrequenz ist, die eine Trägerfrequenz für einen normalen Betrieb ist; wonach der Kompressor (21) vorübergehend stoppt; und anschließend der Kompressor (21) sich wieder einschaltet, um den Normalbetrieb mit der ersten Trägerfrequenz durchzuführen.

5. Kältegerät (1) nach Anspruch 4, wobei das Kältegerät (1) konfiguriert ist, den Kompressor dergestalt zu steuern, dass der Kompressor (21) sich wieder einschaltet, nachdem eine Trägerfrequenz auf die erste Trägerfrequenz erhöht wurde, und dass der Kompressor (21) angewiesen wird, den Normalbetrieb mit der ersten Trägerfrequenz durchzuführen.

6. Kältegerät (1) nach Anspruch 3 oder 4, weiter ein Bestimmungsmittel (31) zu der Bestimmung dessen, ob es sich um den erstmaligen Betrieb des Kompressors (21) handelt oder nicht, umfassend.

7. Kältegerät (1) nach Anspruch 6, weiter eine Merkerspeichereinheit (32) umfassend, die konfiguriert ist, einen Merker (35) zu speichern, welcher einen erstmaligen Betrieb des Kompressors (21) anzeigt, wobei
das Bestimmungsmittel (31) konfiguriert ist, durch Überprüfen des Merkers (35) zu bestimmen, ob es sich um den erstmaligen Betrieb des Kompressors (21) handelt oder nicht.

## Revendications

1. Procédé de fonctionnement d'un compresseur d'un dispositif de réfrigérateur (1) qui est un procédé de fonctionnement d'un compresseur (21) d'un dispositif de réfrigérateur (1), comprenant :
une étape de fonctionnement initial, dans laquelle le compresseur (21) après l'installation du dispositif de réfrigérateur (1) est actionné à une fréquence porteuse inférieure à une fréquence porteuse pour un fonctionnement normal ; et
une étape de fonctionnement normal successive, dans laquelle le compresseur (21) est actionné à la fréquence porteuse pour le fonctionnement normal,
dans lequel le compresseur (21) est entraîné par un moteur (21a) qui est commandé par un inverseur, dans lequel
le procédé de fonctionnement du compresseur du dispositif de réfrigérateur (1) comprend en outre une étape de détermination, dans laquelle il est déterminé s'il s'agit d'un fonctionnement du compresseur (21) initial avant que le compresseur (21) ne soit utilisé.

2. Procédé de fonctionnement d'un compresseur du dispositif de réfrigérateur (1) selon la revendication 1, dans lequel
dans l'étape de détermination, on détermine s'il s'agit d'un fonctionnement initial du compresseur (21) en vérifiant un indicateur (35).

3. Dispositif de réfrigérateur (1) comprenant :
un compresseur (21), dans lequel
le dispositif de réfrigérateur (1) permet la réalisation d'une opération de préchauffage du compresseur (21) pendant le temps depuis l'allumage initial après l'installation du dispositif de réfrigérateur (1) jusqu'à un fonctionnement normal, et l'opération de préchauffage du compresseur (21) est réalisée à une seconde fréquence porteuse qui est inférieure à une première fréquence porteuse, qui est une fréquence porteuse pour le fonctionnement normal.

4. Dispositif de réfrigérateur (1), comprenant :
un compresseur (21)
dans lequel le dispositif de réfrigérateur (1) est configuré pour commander le compresseur de sorte que,
lors d'un fonctionnement initial du compresseur (21) après l'installation du dispositif de réfrigérateur (1), le dispositif de réfrigérateur (1) fait effectuer au compresseur (21) un fonctionnement préliminaire pendant un laps de temps prédéterminé à une troisième fréquence porteuse, qui est inférieure à une première fréquence porteuse qui est une fréquence porteuse pour un fonctionnement normal ; ensuite, temporairement, le compresseur (21) s'arrête ; puis, le compresseur (21) redémarre pour effectuer le fonctionnement normal à la première fréquence porteuse.

5. Dispositif de réfrigérateur (1) selon la revendication 4, dans lequel le dispositif de réfrigérateur (1) est configuré pour commander le compresseur, de sorte que ledit compresseur (21) redémarre après l'augmentation d'une fréquence porteuse à la première fréquence porteuse, et le compresseur (21) effectue un fonctionnement normal à la première fréquence porteuse.

6. Dispositif de réfrigérateur (1) selon la revendication 3 ou 4, comprenant en outre un moyen de détermination (31) visant à déterminer s'il s'agit ou non d'un fonctionnement initial du compresseur (21).

7. Dispositif de réfrigérateur (1) selon la revendication 6, comprenant en outre une unité de mémoire à indicateur (32) configurée pour conserver un indicateur (35) qui indique un fonctionnement initial du compresseur (21), dans lequel
le moyen de détermination (31) est configuré pour déterminer s'il s'agit ou non d'un fonctionnement initial du compresseur (21) en vérifiant l'indicateur (35).
